# EUROPEAN PATENT SPECIFICATION

(11) **EP 0 442 353 B1**
(45) Date of publication and mention of the grant of the patent: **15.06.1994**
(21) Application number: 91101545.1
(22) Date of filing: 05.02.1991
(51) Int. Cl.: B60R 1/06

(54) **External rear-view or manoeuvring mirror for motor vehicles**
Aussen angebrachter Rück- oder Manöverspiegel für Kraftfahrzeuge
Miroir extérieur de rétrovisée ou de manoeuvre pour véhicules à moteur

(30) Priority: 16.02.1990 IT 6711790
(43) Date of publication of application: 21.08.1991
(73) Proprietor: IVECO FIAT S.p.A., 10156 Torino (IT)
(72) Inventor: Cavaletto, Alberto, I-10100 Torino (IT); Savio, Piero, I-10040 Borgaretto (IT)
(74) Representative: Boggio, Luigi

(56) References cited:
- EP-A- 0 004 329
- GB-A- 1 370 621
- GB-A- 2 045 187

## Description

The present invention relates to an external rear-view mirror assembly in a motor vehicle and, in particular, a manoeuvring mirror assembly, or a mirror assembly for observing pedestrians, in a commercial vehicle.

Rear-view mirrors generally comprise a support housing for the mirror and means for the fastening thereof to the body, generally a pillar or the door frame. Because motor vehicles and, especially, commercial vehicles can be right-hand or left-hand drive, it is essential for the body to be already prepared during mass production for the fitting of the mirror respectively on the left or right, while for standardisation reasons it is desirable for the mirror to be of a single type which can be fitted on both sides.

At present, the fastening of the mirror is carried out by means of screws or bolts which fit into corresponding holes in the body. Before the painting operation, these holes have to be closed by means of plugs so as to prevent paint from accumulating in these holes and clogging the thread for the mounting screw. Moreover, in the finished motor vehicle the hole on that side of the body which is not fitted with a mirror has to be closed with another finishing plug to prevent the ingress of atmospheric agents into the body structure.

These disadvantages are particularly apparent in the case of manoeuvring mirror which is fitted only optionally on the upper cross member of the door opposite the driving side.

It is also known from the document GB-A-2 045 187 an external, removable mirror assembly according to the preamble of claim 1 and having a top mounting point in the gap between the bonnet and a fixed part of the vehicle body, and a bottom mounting point on an outer edge of the front wheel arch. The assembly comprises a tube bent at a right angle, which at one end slidably mounts an adjusting part carrying a plastic covered angle iron to engage the gap, and at the other end slidably mounts an adjusting part carrying a plastic covered hook to engage the outer edge of the wheel arch.

It is the object of the present invention is to provide an external rear-view or manoeuvring mirror assembly which offers the maximum simplicity in manufacture and installation, and which obviates the above mentioned disadvantages found in known mirror assemblies.

This object is achieved by an external mirror assembly in accordance with the invention, which comprises a support housing for the mirror, and fastening means for the fastening thereof to the body of the motor vehicle, said fastening means comprising a first bent member adapted to be engaged on a first edge of said body, a jaw opposed to said first bent member and adapted to engage a second edge of said body, said first edge and said second edge being substantially parallel to one another, and at least one screw which can be screwed into a threaded seating provided in said jaw, and is characterised in that said first bent member is provided on a flange integral with said housing, said screw passing through a hole provided in said flange, said jaw comprising another bent member adapted to engage in a slot provided in said body in a position adjacent to said second edge.

With a view to a better understanding of the invention, some variants of a preferred form of embodiment of the invention will be described below by way of example, with reference to the accompanying drawings, wherein:
Figure 1 is schematic view of a motor vehicle, in particular a commercial vehicle, provided with an external or manoeuvring mirror assembly according to the invention;
Figure 2 is a view in perspective of a manoeuvring mirror assembly according to the invention;
Figure 3 is a partial section along a line III-III in Figure 2, on an enlarged scale;
Figure 4 is a variant of a detail in Figure 3;
Figure 5 is another variant of the detail in Figure 4;
Figure 6 is a partial section along a line VI-VI in Figure 2, also on an enlarged scale.

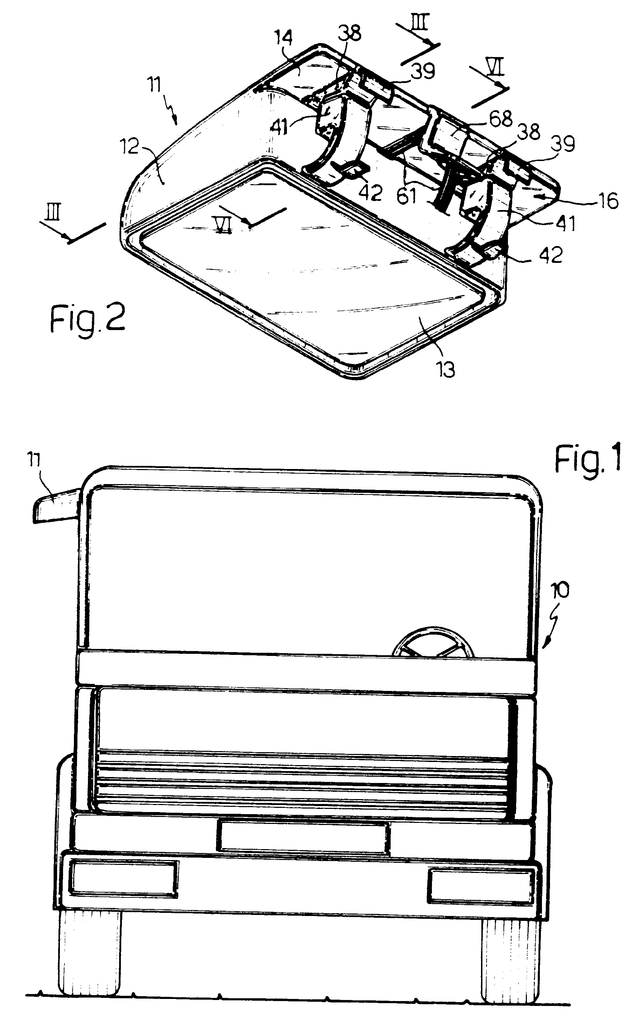

Referring now to Figure 1, the reference numeral 10 designates a left-hand drive motor vehicle, essentially a commercial vehicle, which in addition to the conventional regulation rear-view mirrors, not shown in the drawing, is provided with a so called manoeuvring mirror assembly 11, hereinafter called mirror, which is fitted to the frame of the respective door so as to enable the driver to observe or catch sight of any pedestrian, cyclist etc. situated close to the motor vehicle itself.

The mirror 11 comprises a moulded housing, generically designated 12 (Figure 2), in which is arranged a pane of reflective glass 13 which is adjustable in known manner. The housing 12 is made of plastics material and is provided with a flange 14 extending over the entire width thereof. The flange 14 is provided with means, generally designated 16, to effect the fastening to the body.

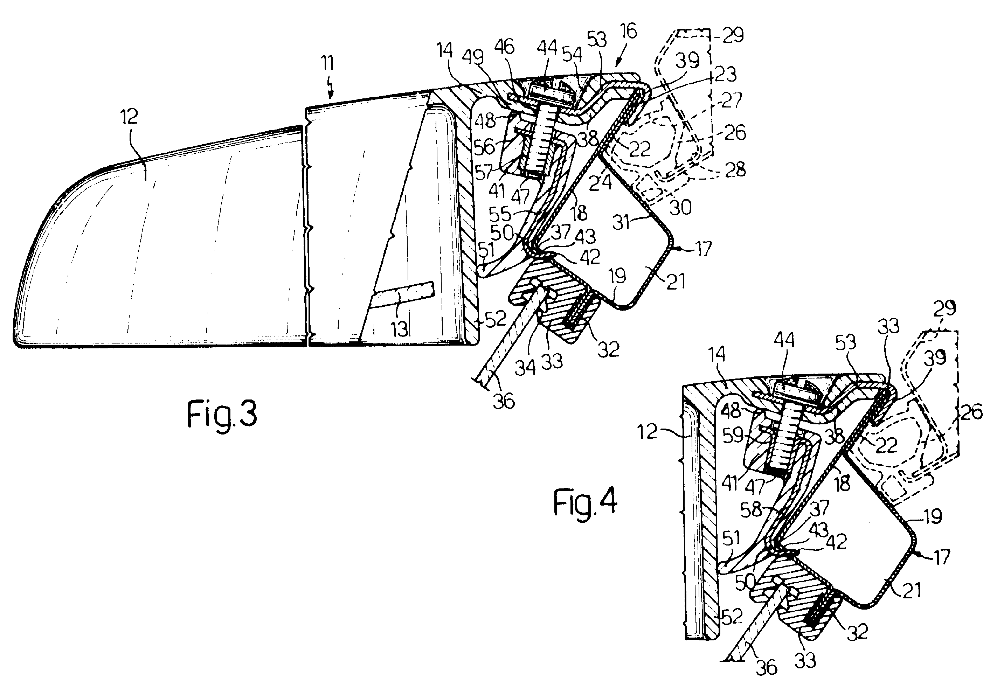

Referring particularly to Figure 3, the mirror 11 can be mounted on the upper cross member 17 of the door on the side opposite the driving side. The cross member 17 comprises a pair of shaped sheet metal portions 18 and 19 which are welded together to form a box-section part 21 and a flange 22 turned upwards. The flange 22 terminates in a reinforced edge 23 formed by bending the sheet 18 over the sheet 19.

When the door is closed the flange 22 abuts against a surface 24 of a seal 26 formed by a hollow section element of resilient material, the edge 23 being arranged in alignment with a recess 27 in the seal 26. The latter is secured to a bent edge 28 of the body proper 29 of the motor vehicle, which delimits the door opening. Furthermore, a surface 31 of the box-section part 21 of the cross member 17 is able to be applied against another wall 30 of the seal 26.

At the bottom, the two sheet metal portions 18 and 19 of the cross member 17 form a flange 32, to which a seal 33 is secured. This seal 33 is provided with a groove in which is fitted the usual pane of glass 36 for the door window. In alignment with the box-section part 21 the sheet portion 18 forms another edge of the cross member 17 comprising a corner 37 opposite the edge 23.

The fastening means 16 for the mirror 11 engage the edge 23 and corner 37 of the cross member 17. In particular, these fastening means 16 comprise two projections 38 (see also Figure 2) integral with the flange 14 of the housing 12, each of said projections having a bent tab 39 able to be engaged on the edge 23.

The fastening means 16 also comprise two jaws 41 connected with the two projections 38 and also consist of plastics material. Each jaw 41 is provided with a bent tongue 42 which can engage in a corresponding slot 43 provided in the sheet metal portion 18 in a position adjacent to the corner 37. The two slots 43 are arranged in alignment with an edge of the seal 33, whereby in the absence of the mirror 11 and therefore of the two tongues 42 they are substantially covered by the seal 33 itself.

Finally, for each jaw 41 the mirror 11 comprises clamping means formed by a screw 44 which fits into a hole 46 in the corresponding projection 38 and which can be screwed into a threaded seating 47 of the jaw 41. The latter is provided with a shoulder 50, which can engage the corner 37 of the cross member 17, and with a rib 48 normally abutting against a surface 49 of the respective projection 38. The jaw 41 is also provided with an end 51 which can abut against a wall 52 of the housing 12. The wall 52 is arranged so as to form with the surface 49 of the projection 38 an angle of between 60° and 90°.

The bent tab 39 is formed on a metal insert 53 having a hole in registration with the hole 46 in the projection 38. The insert 53 is embedded in the projection 38, during the injection of the plastics material, in such a way as to leave exposed both the tab 39 and a zone in registration with the hole 46, thus forming a recess 54 in the projection 38. Therefore, this zone of the insert 53 forms a high-strength surface for the abutment of the screw 44.

In the form of embodiment in Figure 3, the bent tongue 42 of the jaw 41 is formed on a second metal insert 55 which has a second bent tab 56 provided with a hole, in which is welded a metal bush 57, said bush being threaded to form the seating 47 for the screw 44. The insert 55 with the bush 57 is embedded in the jaw 41 during the injection of the plastics material for the moulding thereof, so as to leave the tongue 42 exposed.

According to the variant of Figure 4, the tongue 42 of the jaw 41 is formed by an insert comprising a metal plate 58 which is formed in one piece with a threaded bush 59 constituting the seating 47. The insert 58, 59 may be formed of pressed sheet or light alloy.

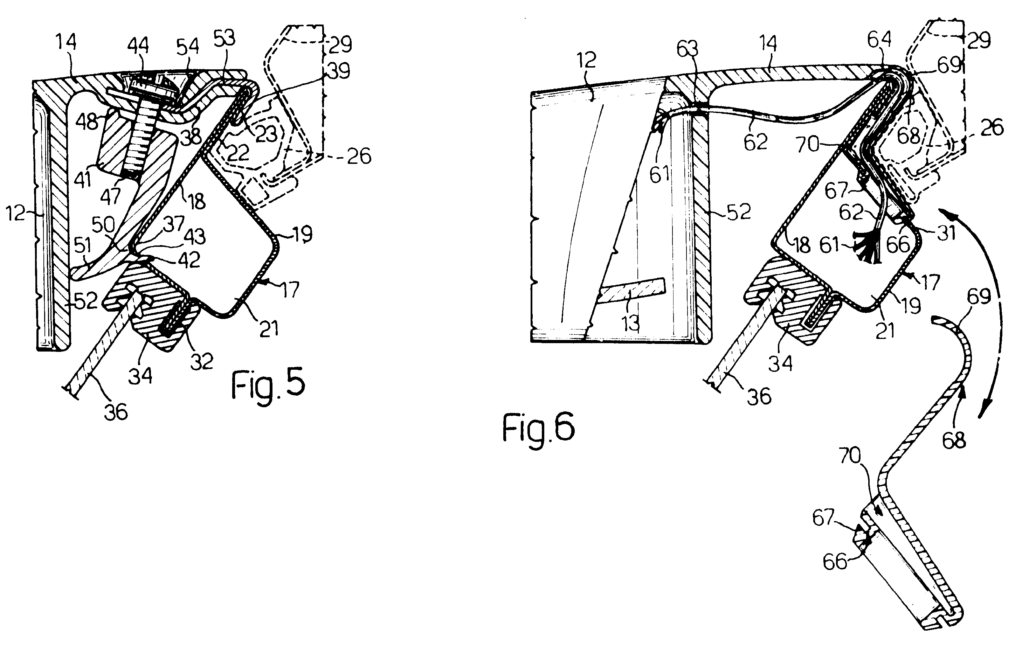

According to the variant of Figure 5, however, the bent tongue 42 comprises a small tooth-like projection formed integrally with the jaw 41, whereas the thread of the seating 47 can be formed directly in the plastics material.

The housing 12 accommodates the mechanisms for the automatic adjustment of the pane 13 of the mirror 11, which mechanisms include the conventional pair of electrically operating motors. The latter are supplied with electric current from the battery of the motor vehicle through a set of wires 61 (Figure 6), optionally covered by a single sheath 62. The wires 61 emerge from the housing 12 through a hole 63 in the wall 52.

In order to protect the wires 61 as they pass from the mirror housing 12 into the box-section part 21 of the cross member 17, the flange 14 is provided with a recess 64 disposed between the two projections 38 (Figure 2), whereas the cross member 17 is provided with an opening 66 (Figure 6) in the surface 31 of the sheet metal portion 19.

The opening 66 is able to accommodate an annular rib 67 formed integrally with a tab 68 of rigid plastics material; the rib 67 is provided with a through-hole 70 for the passage of the electric wires 61.

The tab 68 is substantially L-shaped, so as to follow the course of the section of the cross member 17, and at the top terminates in a curved projection 69 bent outwards and downwards. This projection is able to embrace the edge 23 of the flange 22 of the cross member 17 and adhere to the end of the recess 64 in the flange 14 when the mirror 11 is mounted on the cross member 17. The tab 68 then forms a protecting conduit for the set of wires 61, thereby eliminating wearing of the wires caused by contact with the seal 26.

The wires 61 pass through the box-section part of the cross member 17 until reaching a conventional connector (not shown). The opening 66 in the cross member 17 not provided with a mirror 11 can be closed by a plug which, when the door is closed, is covered by the seal 26, whereby the interior of the cross member 17 is not affected by weathering.

To mount the mirror 11 on the cross member 17, after the plug has been removed from the opening 66, the annular rib 67 of the tab 68 (with the wires 61 already installed therein) is engaged in said opening, said tab being positioned so as to be arranged adjacent the flange 22 of the cross member 17. Subsequently, by acting on the two screws 44 (Figures 3, 4, 5) the jaws 41 are loosened and the mirror 11 is arranged so as to insert the two tongues 42 into the slots 43 and so as to engage the edge 23 of the cross member 17 with the tabs 39. In this way the end of the recess 64 in the flange 14 is positioned opposite the end of the bent tab 68.

Finally, the two screws 44 are tightened until the shoulder 50 of each jaw 41 is brought into engagement with the corner 37 of the box-section part 21 of the cross-member 17. In this way the mirror 11 is clamped to the cross member 17 so as to remain secured and rigidly fixed with the tabs 39 to the edge 23 of the flange 22 and with the shoulder 50 to the corner 37.

The advantages of the mirror 11 with respect to known mirrors are evident from the foregoing.

In fact, the mirror 11 can be installed at the end of the assembly line or subsequently at any time by the consumer. This installation does not require any hole in the outer surface of the body, whereby the painting operation does not require any precautions to be taken with a view to protecting the tapped holes.

It is evident that the mirror 11 described above could undergo various modifications.

For example, the mirror can be used as a regulation rear-view mirror, in which case instead of being mounted on the upper cross member it is fitted on the door pillar or on a pair of suitable fastening edges provided in other positions on the body.

Furthermore, the structure and form of the jaws 41 and of the projections 38 could additionally be modified.

Finally, the tab 68 could be integral with the flange 14 and could comprise a conduit of closed section so as also to prevent the wires 61 from coming into contact with the flange 22.

## Claims

1. An external rear-view or manoeuvring mirror assembly in a motor vehicle, comprising a support housing (12) for the mirror (13), and fastening means (16) for the fastening thereof to the body of the motor vehicle, said fastening means (16) comprising a first bent member (39) adapted to be engaged on a first edge (23) of said body, a jaw (41) opposed to said first bent member (39) and adapted to engage a second edge (37) of said body, said first edge (23) and said second edge (37) being substantially parallel to one another, and at least one screw (44) which can be screwed into a threaded seating (47) provided in said jaw (41), characterised in that said first bent member (39) is provided on a flange (14) integral with said housing (12), said screw (44) passing through a hole (46) provided in said frame (14), said jaw (41) comprising another bent member (42) adapted to engage in a slot (43) provided in said body in a position adjacent to said second edge (37).

2. A mirror assembly according to Claim 1, characterised in that said first edge (23) and said second edge (37) are provided on the upper cross member (17) of the frame of a glazed door, said slot (42) being provided in said cross member (17).

3. A mirror assembly according to Claim 1 or 2, characterised in that said flange (14) extends substantially over the entire width of said housing (12), said first bent member (39) being provided on a projection (38) integral with said flange (14).

4. A mirror assembly according to Claim 3, characterised in that said first edge (23) is disposed on a flange (22) of the said upper cross member (17), which flange (22) is adapted to bear against a seal (26) in the door opening, said first bent member (39) being adapted to fit into a recess (27) in said seal (26).

5. A mirror assembly according to Claim 3 or 4, characterised in that said second edge comprises a corner (37) of a box-section part (21) of said cross member (17), said slot (43) being provided in said part (21) in a position adjacent to a seal (34) for the glass (36) of said glazed door.

6. A mirror assembly according to Claim 5, characterised in that said jaw (41) comprises at least one rib (48) for abutment against a surface (49) of said projection (38) and a member (51) for abutment against a wall (52) of said housing (12), said wall (52) forming with said surface (49) an angle of between 60° and 90°.

7. A mirror assembly according to Claim 6, characterised in that said flange (14) of said housing (12) is provided with a pair of said projections (38), each being provided with said first bent member (39) and co-operating with a corresponding jaw (41).

8. A mirror assembly according to Claim 7, characterised in that said housing (12), said flange (14) of said housing (12) and said projections (38) are formed of plastics material, said first bent member (39) being formed by a metal insert (53) embedded in said projection (38) and extending up to said hole (46) so as to form a high-strength abutment for said screw (44).

9. A mirror assembly according to Claim 8, characterised in that said jaw (41) is formed in one piece of plastics material, said other bent member (42) and said seating (47) being formed integrally with said jaw (41).

10. A mirror assembly according to Claim 8, characterised in that said jaw (41) is formed in one piece of plastics material, said other bent member (42) and said seating (47) comprising a metal insert (55 or 58) embedded in the plastics material of said jaw (41).

11. A mirror assembly according to Claim 10, characterised in that said insert in said jaw (41) comprises a plate (55) provided with a bent tongue (42) and a threaded bush (57) secured to said plate (55) and forming said seating (47).

12. A mirror assembly according to Claim 10, characterised in that said insert in said jaw (41) is formed in one piece from pressed metal and comprises a plate (58) provided with a bent tongue (42) and with a threaded bush (59) forming said seating (47).

13. A mirror assembly according to Claim 4 and any of Claims 5 to 12, in which a set of electrical wires (61) for controlling the automatic adjustment of the mirror and emerging from said housing (12) can be inserted in an opening (66) in said box-section part (21), characterised in that said flange (14) of said housing (12) is provided with a recess (64) for the passage of said wires (61) around said first edge (23), a tab (68) being provided to protect said wires (61) from said seal (26) for the door opening.

14. A mirror assembly according to Claim 13, characterised in that said tab (68) is provided with an annular rib (67) which can engage in said opening (66) in said box-section part (21) and which is provided with a hole (70) for the passage of said wires (61), said tab (68) being substantially L-shaped so as to conform in operation to the section of said cross member (17) and engage one end of said recess (64).

## Patentansprüche

1. Außen-Rück- oder Manövrierspiegelanordnung für ein Motorfahrzeug, mit einem Trägergehäuse (12) für den Spiegel (13) und Befestigungseinrichtungen (16) zu dessen Befestigung am Aufbau des Motorfahrzeugs, welche Befestigungseinrichtungen (16) ein erstes gebogenes Teil (39) zum Erfassen einer ersten Kante (23) des Aufbaus, eine Klaue (41) gegenüber dem ersten gebogenen Teil (39) zum Erfassen einer zweiten Kante (37) des Aufbaus, wobei die erste Kante (23) und die zweite Kante (37) im wesentlichen parallel zueinander sind, und wenigstens eine Schraube (44) umfaßt, die in einen Gewindesitz (47) der Klaue (41) einschraubbar ist, dadurch **gekennzeichnet**, daß das erste gebogene Teil (39) an einem Flansch (14) vorgesehen ist, der einstückig mit dem Gehäuse (12) ausgebildet ist, wobei die Schraube (44) durch ein Loch (46) hindurchgeht, das in dem Rahmen (14) ausgebildet ist, welche Klaue (41) ein weiteres gebogenes Teil (42) umfaßt, das in einen Schlitz (43) eingreift, der in dem Aufbau in einer Position angrenzend an die zweite Kante (37) ausgebildet ist.

2. Spiegelanordnung nach Anspruch 1, dadurch **gekennzeichnet,** daß die erste Kante (23) und die zweite Kante (37) an dem oberen Querglied (17) des Rahmens einer verglasten Tür vorgesehen sind, wobei der Schlitz (42) in dem Querglied (17) ausgebildet ist.

3. Spiegelanordnung nach Anspruch 1 oder 2, dadurch **gekennzeichnet**, daß der Flansch (14) sich im wesentlichen über die gesamte Breite des Gehäuses (12) erstreckt, wobei das erste gebogene Teil (39) an einem Vorsprung (38) vorgesehen ist, der einstückig mit dem Flansch (14) ausgebildet ist.

4. Spiegelanordnung nach Anspruch 3, dadurch **gekennzeichnet**, daß die erste Kante (23) an einem Flansch (22) des oberen Quergliedes (17) vorgesehen ist, wobei der Flansch (22) gegen eine Dichtung (26) in der Türöffnung anliegt, wobei das erste gebogene Teil (39) in eine Ausnehmung (27) in der Dichtung (26) eingreift.

5. Spiegelanordnung nach Anspruch 3 oder 4, dadurch **gekennzeichnet,** daß die zweite Kante eine Ecke (37) eines kastenförmigen Teils (21) des Quergliedes (17) umfaßt, wobei der Schlitz (43) in dem Teil (21) in einer Position angrenzend an eine Dichtung (34) für das Glas (36) der verglasten Tür vorgesehen ist.

6. Spiegelanordnung nach Anspruch 5, dadurch **gekennzeichnet**, daß die Klaue (41) wenigstens eine Rippe (48) zum Anschlagen gegen eine Oberfläche (49) des Vorsprunges (38) und ein Teil (35) zum Anschlagen gegen eine Wand (52) des Gehäuses (12) umfaßt, welche Wand (52) mit der Oberfläche (49) einen Winkel zwischen 60° und 90° bildet.

7. Spiegelanordnung nach Anspruch 6, dadurch **gekennzeichnet,** daß der Flansch (14) des Gehäuses (12) mit zwei Vorsprüngen (38) versehen ist, deren jeder mit dem ersten gebogenen Teil (39) versehen ist und mit einer entsprechenden Klaue (41) zusammenwirkt.

8. Spiegelanordnung nach Anspruch 7, dadurch **gekennzeichnet**, daß das Gehäuse (12), der Flansch (14) des Gehäuses (12) und die Vorsprünge (38) aus Kunststoffmaterial gebildet sind, wobei das erste gebogene Teil (39) durch einen Metalleinsatz gebildet ist, der in den Vorsprung (38) eingeformt ist und sich nach oben zu der Bohrung (46) erstreckt und somit einen hochfesten Anschlag für die Schraube (44) bildet.

9. Spiegelanordnung nach Anspruch 8, dadurch **gekennzeichnet**, daß die Klaue (41) als ein Stück aus Kunststoffmaterial ausgebildet ist, wobei das andere gebogene Teil (42) und der Sitz (47) einstückig mit der Klaue (41) ausgebildet sind.

10. Spiegelanordnung nach Anspruch 8, dadurch **gekennzeichnet**, daß die Klaue (14) als ein Stück aus Kunststoffmaterial ausgebildet ist, wobei das andere gebogene Teil (42) und der Sitz (47) einen Metalleinsatz (55) oder (58) umfassen, der in das Kunststoffmaterial der Klaue (14) eingebettet ist.

11. Spiegelanordnung nach Anspruch 10, dadurch **gekennzeichnet,** daß der Einsatz in der Klaue (41) eine Platte (55) umfaßt, die mit einer gebogenen Zunge (42) versehen ist, und eine Gewindebuchse (57), die an der Platte (55) befestigt ist und den Sitz (47) bildet.

12. Spiegelanordnung nach Anspruch 10, dadurch **gekennzeichnet**, daß der Einsatz in der Klaue (41) als ein Stück aus gepreßtem Material gebildet ist und eine Platte (58) umfaßt, die mit einer gebogenen Zunge (42) versehen ist, und mit einer Gewindebuchse (49), die den Sitz (47) bildet.

13. Spiegelanordnung nach Anspruch 4 und einem der Ansprüche 5 bis 12, bei der ein Satz von elektrischen Drähten (61) zur Steuerung der automatischen Einstellung des Spiegels, die aus dem Gehäuse (12) austreten, in eine Öffnung (66) in dem kastenförmigen Teil (21) eingefügt werden kann, dadurch **gekennzeichnet**, daß der Flansch (14) des Gehäuses (12) mit einer Ausnehmung (64) für den Durchgang der Drähte (61) um die erste Kante (23) versehen ist und eine Lasche (68), ausgehend von der Dichtung (26) für die Türöffnung, vorgesehen ist zum Schutz der Drähte (61).

14. Spiegelanordnung nach Anspruch 13, dadurch **gekennzeichnet**, daß die Lasche (68) mit einer ringförmigen Rippe (67) versehen ist, die in die Öffnung (66) des kastenförmigen Teiles (21) eingreift und mit einer Bohrung (70) für den Durchgang der Drähte (61) versehen ist, welche Lasche (68) im wesentlichen L-förmig ausgebildet ist zur Anpassung an den Querschnitt des Quergliedes (17) und Eingreifen in ein Ende der Ausnehmung (64).

## Revendications

1. Agencement de miroir extérieur de rétrovisée ou de manoeuvre dans un véhicule automobile, comprenant un boîtier de support (12) destiné au miroir (13), et un moyen de fixation (16) servant à sa fixation à la carrosserie du véhicule automobile, ledit moyen de fixation (16) comprenant un premier organe incurvé (39) adapté de façon à être engagé sur un premier bord (23) de ladite carrosserie, une mâchoire de serrage (41) opposée audit premier organe incurvé (39) et adaptée de façon à s'engager sur un second bord (37) de ladite carrosserie, ledit premier bord (23) et ledit second bord (37) étant pratiquement parallèles entre eux, et au moins une vis (44), qui peut être vissée dans un siège taraudé (47) prévu dans la dite mâchoire de serrage (41), caractérisé en ce que ledit premier organe incurvé (39) est prévu sur un rebord (14) réalisé d'un seul tenant avec ledit boîtier (12), ladite vis (44) traversant un trou (46) ménagé dans ledit rebord (14), ladite mâchoire de serrage (41) comprenant un autre organe incurvé (42) adapté de façon à s'engager dans une fente (43) prévue dans ladite carrosserie, en un emplacement adjacent audit second bord (37).

2. Agencement de miroir selon la revendication 1, caractérisé en ce que ledit premier bord (23) et ledit second bord (37) sont prévus sur l'organe transversale (17) supérieur du cadre d'une porte vitrée, ladite fente (42) étant prévue dans ledit organe transversale (17).

3. Agencement de miroir selon la revendication 1 ou 2, caractérisé en ce que ledit rebord (14) s'étend pratiquement sur toute la largeur dudit boîtier (12), ledit premier organe incurvé (39) étant prévu sur une saillie (38) réalisée d'un seul tenant avec ledit rebord (14).

4. Agencement de miroir selon la revendication 3, caractérisé en ce que ledit premier bord (23) est disposé sur un rebord (22) dudit organe transversal supérieur (17), ce rebord (22) étant adapté de façon à porter contre un joint d'étanchéité (26) situé dans l'ouverture de porte, ledit premier organe incurvé (39) étant adapté de façon à s'insérer dans une cavité (27) ménagée dans ledit joint d'étanchéité (26).

5. Agencement de miroir selon la revendication 3 ou 4, caractérisé en ce que ledit second bord comprend un angle (37) d'une partie (21), à section en forme de boîte, dudit organe transversal (17), ladite fente (43) étant prévue dans ladite partie (21), dans une position adjacente à un joint d'étanchéité (34) destiné à la vitre (36) de ladite porte vitrée.

6. Agencement de miroir selon la revendication 5, caractérisé en ce que ladite mâchoire de serrage (41) comprend au moins une nervure (48) destinée à venir en butée contre une surface (49) de ladite saillie (38) et un organe (51) destiné à venir en butée contre une paroi (52) dudit boîtier (12), ladite paroi (52) formant avec la dite surface (49) un angle compris entre 60° et 90°.

7. Agencement de miroir selon la revendication 6, caractérisé en ce que ledit rebord (14) dudit boîtier (12) est pourvu d'un couple des dites saillies (38), chacune d'entre elles étant pourvues dudit premier organe incurvé (39) et coopérant avec une mâchoire de serrage (41) correspondante.

8. Agencement de miroir selon la revendication 7, caractérisé en ce que ledit boîtier (12), ledit rebord (14) dudit boîtier (12) et ladite saillie (38) sont formés en matière plastique, ledit premier organe incurvé (39) étant formé par un insert métallique (53) noyé dans ladite saillie (38) et s'étendant vers le haut vers ledit trou (46), de manière à former une butée hautement résistante pour ladite vis (44).

9. Agencement de miroir selon la revendication 8, caractérisé en ce que ladite mâchoire de serrage (41) est réalisée d'un seul tenant en matière plastique, ledit autre organe incurvé (42) et ledit siège (47) étant réalisé d'un seul tenant avec ladite mâchoire de serrage (41).

10. Agencement de miroir selon la revendication 8, caractérisé en ce que ladite mâchoire de serrage (41) est réalisée d'un seul tenant en matière plastique, ledit autre organe incurvé (42) et ledit siège (47) comprenant un insert métallique (55 ou 58) noyé dans la matière plastique de ladite mâchoire de serrage (41).

11. Agencement de miroir selon la revendication 10, caractérisé en ce que ledit insert situé dans ladite mâchoire de serrage (41) comprend une plaque (55) pourvue d'une languette incurvée (42) et une douille taraudée (57), fixée à ladite plaque (55) et formant ledit siège (47).

12. Agencement de miroir selon la revendication 10, caractérisé en ce que ledit insert situé dans ladite mâchoire de serrage (41) est réalisé d'un seul tenant à partir de métal estampé ou embouti et comprend une plaque (58) pourvue d'une languette incurvée (42) et d'une douille taraudée (59), formant ledit siège (47).

13. Agencement de miroir selon la revendication 4 et selon l'une quelconque des revendications 5 à 12, dans lequel un jeu de câbles électriques (61), servant à commander le réglage automatique du miroir et sortant dudit boîtier (12), peut être inseré dans une ouverture (66) ménagée dans ladite partie à section en forme de boîte (21), caractérisé en ce que ledit rebord (14) dudit boîtier (12) est pourvu d'une cavité (64) permettant le passage desdits câbles (61) autour dudit premier bord (23), une patte (68) étant prévue afin de protéger lesdits câbles (61) dudit joint d'étanchéité (26), lors de l'ouverture de la porte.

14. Agencement de miroir selon la revendication 13, caractérisé en ce que ladite patte (68) est pourvue d'une nervure annulaire (67), qui peut s'introduire dans ladite ouverture (66) ménagée dans ladite partie à section en forme de boîte (21) et qui est pourvue d'un trou (70) permettant le passage desdits câbles (61), ladite patte (68) étant réalisée pratiquement en forme de L, de manière à se conformer en fonctionnement à la section transversale dudit organe transversal (17) et à venir au contact d'une extrémité de ladite cavité (64).
